Europäisches Patentamt

European Patent Office

Office européen des brevets

(19)

(11) Numéro de publication : **0 014 505**
**B1**

(12)

# FASCICULE DE BREVET EUROPÉEN

(45) Date de publication du fascicule du brevet :
**19.05.82**

(21) Numéro de dépôt : **80200079.4**

(22) Date de dépôt : **29.01.80**

(51) Int. Cl.³ : **H 04 B   3/46**, **H 04 L   1/24**,
**H 04 B   3/23**

(54) **Système de test d'un dispositif muni d'un annuleur d'écho.**

(30) Priorité : **05.02.79 FR 7902903**

(43) Date de publication de la demande :
**20.08.80 (Bulletin 80/17)**

(45) Mention de la délivrance du brevet :
**19.05.82 Bulletin 82/20**

(84) Etats contractants désignés :
**BE CH DE FR GB IT NL SE**

(56) Documents cités :
**FR - A - 2 357 119**
**FR - A - 2 386 202**

(73) Titulaire : **TELECOMMUNICATIONS RADIOELECTRI-
QUES ET TELEPHONIQUES T. R. T.
88, rue Brillat Savarin
F-75013 Paris (FR)**

(72) Inventeur : **Guidoux, Loic Bernard Yves
SOCIETE CIVILE S.P.I.D. 209 rue de l'Université
F-75007 Paris (FR)**

(74) Mandataire : **Tissot, Jean et al
Société Civile S.P.I.D. 209, rue de l'Université
F-75007 Paris (FR)**

Imprimerie Jouve, 18, rue St-Denis, 75001 Paris, France

Système de test d'un dispositif muni d'un annuleur d'écho

L'invention concerne un système de test d'un dispositif comportant un circuit d'émission et un circuit de réception couplés à une ligne de transmission par l'intermédiaire d'une jonction hybride, ce dispositif comportant un annuleur d'écho muni d'un circuit de différence dont une entrée est connectée à l'extrémité réceptrice de la jonction hybride, l'autre entrée à un générateur de signal de copie d'écho, et enfin la sortie audit circuit de réception, ledit test consistant en une comparaison du signal restitué par le circuit de réception et d'un signal de test appliqué au circuit d'émission lorsque le dispositif à tester est bouclé du côté de la ligne de transmission.

Le dispositif à tester peut être par exemple un modem de transmission de données dont le circuit d'émission est un émetteur qui module une porteuse en fonction de données à transmettre par la ligne de transmission et dont le circuit de réception est un récepteur qui restitue les données reçues de la ligne de transmission. L'annuleur d'écho incorporé dans ce modem a pour but d'empêcher tout signal provenant de l'émetteur et apparaissant à l'extrémité réceptrice de la jonction hybride (par suite d'imperfections de cette jonction ou d'échos sur la ligne de transmission), de parvenir à l'entrée du récepteur. Un tel signal appelé signal d'écho est annulé à la sortie du circuit de différence de l'annuleur d'écho.

Pour tester un modem, il est classique d'en effectuer le bouclage du côté de la ligne de transmission, ce bouclage consistant à faire apparaître d'une manière ou d'une autre sur l'extrémité réceptrice de la jonction hybride, un signal de bouclage correspondant au signal fourni par l'émetteur. Le test d'un modem bouclé de cette manière et à l'émetteur duquel est appliquée une séquence de test doit consister à vérifier si le signal restitué par le récepteur est identique ou non à cette séquence de test. Or en appliquant ce système de test à un modem muni d'un annuleur d'écho, on se heurte au problème suivant. Le signal de bouclage apparaissant à l'extrémité réceptrice de la jonction hybride lors de l'émission de la séquence de test, est traité par l'annuleur d'écho comme un signal d'écho et se trouve donc annulé à la sortie du circuit de différence. Un bon fonctionnement de l'annuleur d'écho se traduit donc pratiquement, lors d'un test, par une absence de signal à l'entrée du récepteur et il en résulte que le signal restitué par le récepteur est indéterminé et de toutes façons différent de la séquence de test appliquée à l'émetteur. Un test effectué de cette manière ne fournit donc aucune indication sur le bon ou le mauvais état de fonctionnement du modem. Si l'on effectue une autre opération du test en débranchant l'annuleur d'écho, on peut connaître l'état de fonctionnement de l'émetteur et du récepteur du modem. Mais même après deux opérations de test du modem, avec et sans annuleur d'écho, on n'a aucune indication sur le fonctionnement de l'annuleur d'écho dans le modem.

La présente invention vise donc à pallier ces difficultés et à fournir un système de test simple et sûr pour un dispositif, tel qu'un modem, muni d'un annuleur d'écho.

Conformément à l'invention, ce système de test comprend un circuit additionneur dont une première entrée est connectée à la sortie du circuit de différence, dont la sortie est connectée au circuit de réception et dont la deuxième entrée est connectée à l'extrémité réceptrice ou émettrice de la jonction hybride par l'intermédiaire d'un circuit interrupteur qui est fermé lors d'un test, des moyens étant prévus pour rendre le signal restitué par le circuit de réception différent du signal de test appliqué au circuit d'émission lorsque le signal fourni par le circuit de différence dépasse un seuil correspondant à une limite pour le bon fonctionnement de l'annuleur d'écho.

La description suivante en regard des dessins annexés, le tout donné à titre d'exemple, fera bien comprendre comment l'invention peut être réalisée.

La figure 1 représente le schéma synoptique d'un modem muni d'un annuleur d'écho.

La figure 2 représente une première variante du système de test de l'invention associé au modem de la figure 1.

La figure 3 représente une deuxième variante du système de test de l'invention.

La figure 4 représente une troisième variante du système de test de l'invention.

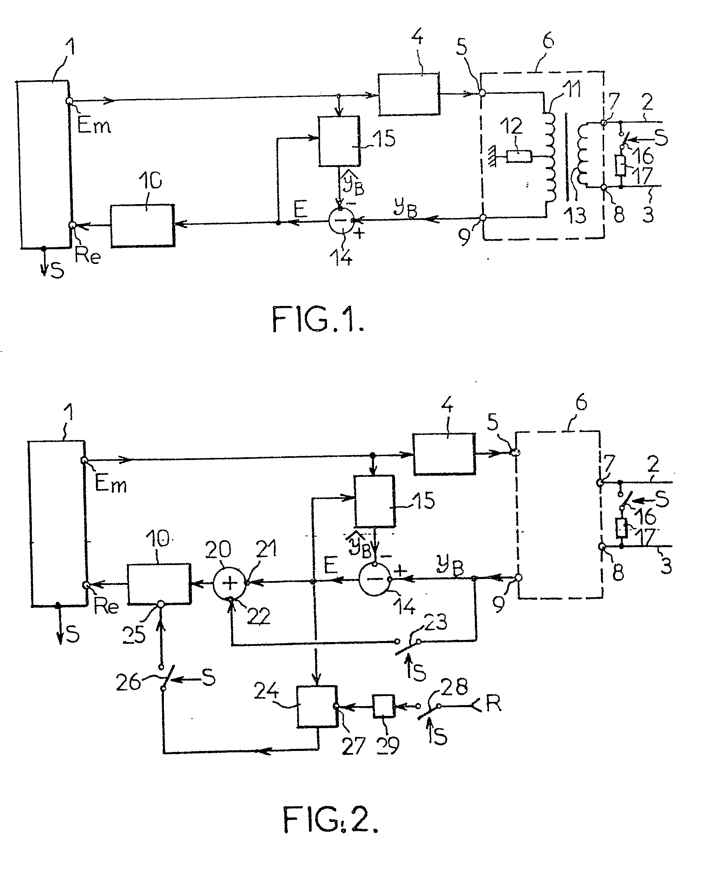

La figure 1 représente le schéma synoptique d'un modem connecté d'un côté à un terminal 1 et de l'autre côté aux deux fils 2 et 3 d'une ligne de transmission. Les données à transmettre apparaissant sur la borne émission Em du terminal 1, sont appliquées à l'émetteur 4 du modem, qui est essentiellement un modulateur si les données sont transmises par modulation d'une porteuse. Cet émetteur peut être aussi un simple codeur si les données sont transmises en bande de base. La sortie de l'émetteur 4 est connectée à l'extrémité émettrice 5 de la jonction hybride 6. Les bornes 7 et 8 de l'accès deux fils de cette jonction sont reliées aux fils 2 et 3 de la ligne de transmission. L'extrémité réceptrice 9 de la jonction hybride est à relier au récepteur 10 du modem, dont la sortie est reliée à la borne réception Re du terminal 1.

La jonction hybride 6 a pour fonction de diriger les signaux provenant de l'émetteur 4, seulement vers la ligne de transmission 2, 3 et de diriger les signaux provenant de l'autre extrémité (non représentée) de cette ligne de transmission vers le récepteur 10. Sous la forme classique représentée, elle est constituée par un transformateur différentiel dont l'enroulement 11 relié aux bornes 5, 9 comporte un point milieu qui est relié à la masse par l'intermédiaire d'une résistance d'équilibrage 12 et dont l'enroulement 13 est relié aux bornes 7 et 8. Un choix convenable du rapport des enroulements 11 et 13 et de la résistance d'équilibrage 12 permet en principe de réaliser la fonction de la jonction hybride. Mais dans la pratique, cette fonction n'est jamais parfaitement réalisée. Lorsque l'émetteur 4 émet, on trouve à l'extrémité réceptrice 9 de la jonction hybride un signal parasite appelé signal d'écho qui peut atteindre le récepteur 10 et qui peut être dû à des imperfections de la jonction hybride et/ou à des discontinuités d'impédance dans la ligne de transmission.

Pour annuler ce signal d'écho il est classique d'utiliser un annuleur d'écho comprenant un circuit de différence 14 dont l'entrée (+) est connectée à l'extrémité réceptrice 9 de la jonction hybride, dont l'entrée (−) est connectée à la sortie d'un générateur de signal de copie d'écho 15 et dont la sortie est connectée à l'entrée du récepteur 10. Le générateur 15 engendre un signal de copie d'écho à partir du signal de données fourni à l'émetteur 4 ; c'est essentiellement un dispositif de filtrage numérique dont les coefficients variables sont commandés à partir du signal de différence E fourni par le circuit de différence 14, pour en minimiser la valeur quadratique moyenne. Un annuleur d'écho de ce genre est décrit par exemple dans la demande de brevet français publiée le 11 août 1978 sous le n° 2 377 734. Dans un autre type connu d'annuleur d'écho, le générateur 15 engendre le signal de copie d'écho à partir du signal de sortie de l'émetteur 4 du modem. De toutes façons, lorsqu'aucun signal n'est transmis au modem depuis l'autre extrémité de la ligne de transmission, le signal de différence E, appelé aussi par la suite signal d'erreur, est pratiquement nul après le temps nécessaire à la convergence de l'annuleur d'écho.

Pour tester un modem, par exemple depuis le terminal 1, il est classique d'effectuer un bouclage du modem du côté de la ligne de transmission, d'engendrer une séquence de test sur la borne émission Em du terminal 1 et de comparer à cette séquence de test le signal en résultant sur la borne réception Re du terminal. Le bouclage du modem peut s'effectuer en débranchant la ligne de transmission et en connectant entre les deux bornes 7 et 8 de la jonction hybride 6 une impédance adaptée 17, au moyen de l'interrupteur 16 commandé pour être fermé par un signal de commande de bouclage S fourni par le terminal au moment du test. En réponse à la séquence de test apparaissant sur la borne Em du terminal, on peut obtenir directement à l'extrémité réceptrice 9 de la jonction hybride 6, par suite de ses imperfections, un signal de bouclage $y_B$ ayant un niveau suffisant pour être traité dans le récepteur 10. Si ce n'est pas le cas, on peut de plus, pour effectuer le test, déséquilibrer la jonction en agissant sur l'impédance d'équilibrage 12 ou sur l'impédance 17.

Il est clair qu'on peut connaître avec certitude le bon état ou le mauvais état de fonctionnement d'un modem ne comportant pas d'annuleur d'écho en vérifiant simplement dans le terminal si le signal reçu sur la borne Re est identique ou non à la séquence de test engendrée sur la borne Em. Par contre, dans le modem envisagé à la figure 1, en réponse à la séquence de test engendrée sur la forme Em du terminal, il se produit d'une part de bouclage $y_B$ à la borne réceptrice 9 de la jonction hybride et d'autre part le signal de copie d'écho $\hat{y}_B$ à la sortie du générateur 15 de l'annuleur d'écho. A la sortie du circuit de différence 14, on obtient la différence de ces deux signaux, $E = y_B - \hat{y}_B$, qui, pratiquement, s'annule après le temps nécessaire à la convergence de l'annuleur d'écho. Finalement, en réponse à une séquence de test engendrée sur la borne d'émission Em du terminal, on obtient, si l'annuleur d'écho fonctionne bien, pratiquement une absence de signal à l'entrée du récepteur du modem et donc un signal indéterminé sur la borne de réception Re du terminal. Ce test ne permet donc pas de faire fonctionner normalement le récepteur du modem et au niveau du terminal ne donne aucune indication sur l'état de fonctionnement du modem.

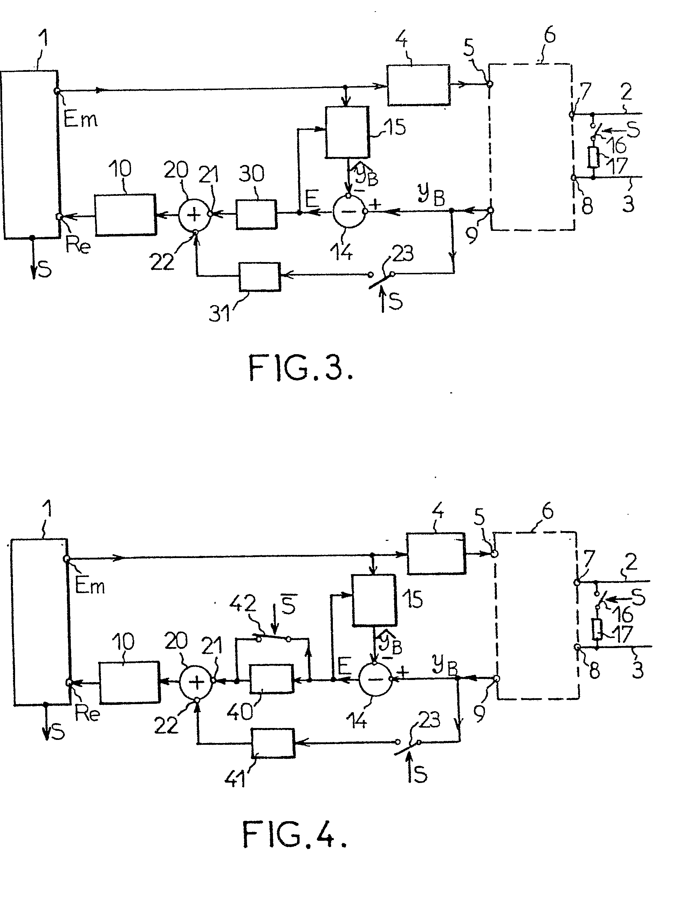

La présente invention fournit un autre système de test permettant de pallier ces inconvénients. La figure 2 représente une première variante du système de test de l'invention, incorporé dans un modem identique à celui de la figure 1 et comportant les mêmes éléments munis des mêmes références.

Selon la figure 2, le système de test de l'invention comprend un circuit additionneur 20 dont une entrée 21 est connectée à la sortie du circuit de différence 14, dont la sortie est connectée à l'entrée du récepteur 10 et dont la deuxième entrée 22 est connectée à l'extrémité réceptrice 9 de la jonction hybride par l'intermédiaire du circuit interrupteur 23 qui est commandé pour être fermé lors du test par le signal de commande de bouclage S fourni par le terminal. Le système de test de l'invention comporte en outre des moyens pour rendre le signal restitué par le récepteur 10 sur la borne réception Re du terminal 1, différent de la séquence de test engendrée sur la borne émission Em du terminal, lorsque le signal d'erreur E de l'annuleur d'écho fourni par le circuit de différence 14, dépasse un seuil correspondant à la limite choisie pour le test du bon fonctionnement de l'annuleur d'écho.

Sous la forme de réalisation représentée à la figure 2, ces moyens pour rendre le signal restitué par le récepteur différent de la séquence de test sont constitués par un détecteur de signal 24 dont l'entrée est connectée à la sortie du circuit de différence 14 et dont la sortie est connectée à un accès 25 du récepteur 10 par l'intermédiaire du circuit interrupteur 26 qui est fermé par le signal de commande de bouclage S. Lorsque le signal de différence E dépasse le seuil précisé ci-dessus, le détecteur de signal 24 fournit un signal logique qui est appliqué au moment du test à l'accès 25 du récepteur 10 et qui, par n'importe quel moyen que pourra imaginer facilement l'homme de l'art, impose à la sortie de ce récepteur un signal différent de la séquence de test émise. Enfin, un signal logique R est appliqué à l'accès 27 du détecteur de signal 24 par l'intermédiaire du circuit interrupteur 28 fermé par le signal de commande de bouclage S et du circuit 29 procurant un retard égal à la durée maximum $\tau$ nécessaire à la convergence de l'annuleur d'écho. Tant que le signal R n'est pas présent sur l'accès 27, c'est-à-dire pendant la durée $\tau$ suivant l'apparition du signal de commande de bouclage S, la sortie du détecteur de signal 24 est inhibée. Ce n'est qu'après cette durée $\tau$ que le détecteur de signal 24 peut agir sur le récepteur 10, comme on l'a expliqué.

Les différents éléments du système de test que l'on vient de décrire, n'ont aucune influence sur le fonctionnement du modem en dehors de la période de test. En effet, en dehors de la période de test, le circuit interrupteur 23 est ouvert et le circuit additionneur 20 transmet sans modification à l'entrée du récepteur 10 le signal présent à la sortie du circuit de différence 14. Ce dernier signal est élevé quand le modem reçoit un signal provenant de l'autre extrémité de la ligne de transmission 2, 3 ; mais comme le circuit interrupteur 26 est ouvert en dehors de la période de test, le récepteur 10 n'est pas influencé par un dépassement de seuil qui peut être détecté par le détecteur de signal 24.

Au moment d'un test, le signal de commande de bouclage S fourni par le terminal commande la fermeture des circuits interrupteurs 16, 23, 26, 28. En réponse à la séquence de test produite à la borne Em du terminal 1, un signal de bouclage $y_B$ apparaît à l'entrée (+) du circuit de différence 14 et à l'entrée 22 du circuit additionneur 20. Pendant la convergence de l'annuleur d'écho le signal E à la sortie du circuit de différence 14 peut dépasser le seuil fixé dans le détecteur de signal 24, mais il n'en résulte aucune action sur le récepteur 10 puisque, comme on l'a vu ci-dessus, la sortie du détecteur de signal 24 est inhibée pendant la durée maximum $\tau$ prévue pour la convergence.

Si, à l'issue de cette durée, l'annuleur d'écho fonctionne correctement, le signal E à la sortie du circuit de différence 14 est quasiment nul et inférieur au seuil fixé dans le détecteur de signal 24, comme limite du bon fonctionnement de l'annuleur d'écho. La sortie du détecteur de signal 24 n'a aucune action sur le récepteur 10. Par ailleurs, à la sortie du circuit additionneur on obtient pratiquement le signal de bouclage $y_B$ appliqué à son entrée 22, puisque le signal E sur son entrée 21 est quasiment nul. En réponse au signal de bouclage $y_B$ le récepteur 10 restitue vers la borne réceptrice Re du terminal 1, la séquence de test qui a été émise sur la borne émettrice Em.

Pour décrire le fonctionnement du système de test dans le cas d'un défaut dans l'annuleur d'écho, on doit distinguer entre plusieurs genres de défauts. Dans un premier cas, l'annuleur d'écho diverge, c'est-à-dire que le générateur 15 fournit un signal $\hat{y}_B$ indéterminé qui est totalement différent du signal de bouclage $y_B$. Il en résulte que le signal d'erreur E à la sortie du circuit de différence 14 et le signal de combinaison $E + y_B$ à la sortie du circuit additionneur 20 sont également indéterminés. Le récepteur 10 restitue alors vers la borne réceptrice Re du terminal 1 un signal différent de la séquence de test qui a été émise sur la borne émettrice Em. A ce résultat qui permet de conclure que le modem est en mauvais état de fonctionnement, contribue également le dépassement par le signal d'erreur E, du seuil fixé dans le détecteur de signal 24.

Dans un autre genre de défaut qui peut se rencontrer dans la pratique, le générateur 15 fournit un signal $\hat{y}_B \simeq 0$, ce qui se traduit par un signal d'erreur $E \simeq y_B$ à la sortie du circuit de différence 14. On obtient alors à la sortie du circuit additionneur 20 un signal pratiquement égal à $2y_B$ qui pourrait être reconnu par le récepteur 10 comme le signal de bouclage correspondant à la séquence de test émise. Mais dans ce cas, grâce au dépassement par le signal d'erreur E du seuil fixé dans le détecteur de signal 24, le récepteur 10 restitue encore vers la borne Re du terminal 1 un signal différent de la séquence de test émise.

Enfin, dans une autre circonstance qui peut se rencontrer dans la pratique, le générateur 15 fournit un signal $\hat{y}_B$ ayant la même forme que le signal de bouclage $y_B$, mais une amplitude insuffisante pour que le signal d'erreur $E = y_B - \hat{y}_B$ soit annulé. Dans ce cas encore, lors d'un test, le signal d'erreur E peut dépasser le deuil du détecteur de signal 24, qui peut être réglé à une valeur aussi faible que l'on veut et le récepteur 10 restituera un signal différent de la séquence de test émise.

Dans le système de test de l'invention, le signal qui est appliqué à l'entrée 22 du circuit additionneur 20 à travers le circuit interrupteur 23 pourrait être non pas le signal de bouclage $y_B$ qui est obtenu à l'extrémité réceptrice 9 de la jonction hybride et qui est appliqué à l'entrée (+) du circuit de différence 14, mais un signal équivalent pour le récepteur 10, tel que le signal obtenu à l'extrémité émettrice 5 de la jonction hybride ou ce qui revient au même le signal obtenu à la sortie de l'émetteur.

Enfin il est possible d'utiliser comme circuit 24, un circuit détecteur de signal existant souvant dans les récepteurs de modems pour d'autres besoins. Le circuit additionneur 20 devrait être dans ce cas inclus dans le récepteur 10.

Une deuxième variante du système de test de l'invention appliqué à un modem est représenté sur la figure 3. Les éléments identiques des figures 2 et 3 portent les mêmes références. Ce système de test comporte toujours un circuit additionneur 20 dont la sortie est connectée à l'entrée du récepteur 10. Mais dans la présente variante, un circuit 30 est inséré entre la sortie du circuit de différence 14 et l'entrée 21 du circuit additionneur 20 et/ou un circuit 31 est inséré sur le chemin du signal de bouclage entre le circuit interrupteur 23 et l'entrée 22 du circuit additionneur 20. Le circuit 30 et le circuit 31 ont des fonctions différentes et telles que, lorsque l'un ou l'autre de ces circuits reçoit un signal, le récepteur 10 restitue un signal correspondant, alors que lorsque le signal d'erreur E fourni par le circuit de différence 14 dépasse, lors d'un test, le seuil correspondant à la limite de bon fonctionnement de l'annuleur d'écho, le signal de combinaison fourni par le circuit additionneur 20 produit à la sortie du récepteur 10 un signal différent de la séquence de test.

On va maintenant décrire, à titre d'exemple, quelques modes de réalisation de cette seconde variante, correspondant à diverses fonctions pour les circuits 30 et 31 et à la présence de l'un et/ou l'autre de ces circuits.

On peut utiliser par exemple un circuit 30 et pas de circuit 31. Ce circuit 30 peut être par exemple un simple circuit inverseur qui change le signe du signal à son entrée. En dehors de la période de test, l'interrupteur 23 étant ouvert, la présence du circuit inverseur 30 ne perturbe pas le fonctionnement du modem, puisqu'on peut aisément dans le récepteur 10 tenir compte du changement de signe effectué. Pendant la période de test, l'interrupteur 23 étant fermé, on retrouve à la sortie du récepteur 10 la séquence de test émise si l'annuleur d'écho fonctionne correctement ; en effet le signal d'erreur E à la sortie du circuit de différence est alors pratiquement nul. Pour expliquer ce qui se passe dans le cas d'un mauvais fonctionnement de l'annuleur d'écho, on se place dans les trois circonstances pratiques évoquées ci-dessus. Si le signal E est indéterminé, le récepteur 10 restitue évidemment vers la borne Re du terminal 1, un signal différent de la séquence de test émise. Si le signal d'erreur E est tel que $E \simeq y_B$, grâce au changement de signe opéré par le circuit inverseur 30, le signal $y_B - E$ fourni par le circuit additionneur 20 est quasiment nul et il en résulte à la sortie du récepteur 10 un signal indéterminé, donc différent de la séquence de test émise. Enfin si le signal d'erreur E a la même forme que le signal de bouclage $y_B$, on ne peut détecter que des défauts importants se traduisant par une valeur de E élevée, telle que le signal $y_B - E$ fourni par le circuit additionneur 20 soit inférieur à la limite de sensibilité du récepteur 10.

Dans le mode de réalisation de l'invention que l'on vient de décrire, le rôle du circuit inverseur 30 peut être rempli par le circuit de différence 14, en inversant les signaux appliqués respectivement à ses entrées (+) et (−) de façon qu'à la sortie de ce circuit de différence on obtienne directement le signal − E, avec $E = y_B - \hat{y}_B$. Il est aisé de tenir compte dans le générateur de copie d'écho 15 du changement de signe du signal d'erreur qui lui est appliqué.

Selon un mode de réalisation de l'invention voisin, on peut aussi utiliser un circuit 31 inverseur, qui change le signe du signal de bouclage $y_B$, et pas de circuit 30. On obtient alors à la sortie du circuit additionneur 20, lors d'un test, le signal $E - y_B$.

Suivant un autre mode de réalisation de l'invention, le circuit 30 ou le circuit 31 peut être un circuit de retard tel que, lors d'un test, le signal de combinaison à la sortie du circuit additionneur 20 détermine à la sortie du récepteur 10 un signal différent de la séquence de test émise.

Par exemple on peut utiliser un circuit 30 procurant un retard T/2 et pas de circuit 31, T étant la durée de chaque bit de données fournies et reçues par le terminal. Un retard procuré par le circuit 30 n'influence évidemment pas le fonctionnement du modem en dehors de la période de test. Pendant la période de test, si l'annuleur fonctionne correctement ($E \simeq 0$), le modem peut être reconnu en bon état de fonctionnement. Un défaut de l'annuleur d'écho, tel que le signal E soit indéterminé, est évidemment toujours facilement reconnu. Si l'annuleur d'écho a un défaut tel que le signal d'erreur E soit égal ou voisin de $y_B$, on obtient à la sortie du circuit additionneur 20, un signal dans lequel, grâce au retard T/2 produit par le circuit 30, des changements se produisent au milieu de la durée T des bits de la séquence de test émise ; il en résulte que le récepteur 10 fournit un signal quelconque différent de la séquence de test émise et le modem peut être reconnu comme en mauvais état de fonctionnement.

On peut aussi utiliser un circuit de retard 31 procurant par exemple un retard T/2 et pas de circuit 30. Il est possible également dans la variante de l'invention de la figure 3, de combiner les deux modes de réalisation décrits ci-dessus. Par exemple les circuits 30 et 31 peuvent être respectivement un circuit inverseur et un circuit de retard et inversement. Le circuit 30 ou le circuit 31 peuvent être aussi un circuit inverseur suivi d'un circuit de retard.

On peut attribuer aux circuits 30 et 31 d'autres fonctions que celles décrites ci-dessus à titre d'exemple et que l'homme de l'art pourra imaginer aisément. Ces fonctions doivent être telles que, en dehors de la période de test, le fonctionnement du modem ne soit pas perturbé et telles que, pendant un test, le signal de combinaison fourni par le circuit additionneur 20 en cas de défaut de l'annuleur d'écho produise à la sortie du récepteur 10 un signal différent de la séquence de test.

On peut aussi combiner les variantes de l'invention décrites aux figures 2 et 3, c'est-à-dire munir le système de test de la figure 3, du détecteur de signal 24 branché exactement comme l'indique la figure 2. On obtient alors que le système de test de la figure 3 peut être rendu, grâce à ce détecteur de signal 24, très sensible à de faibles défauts de l'annuleur d'écho se traduisant par une valeur du signal d'erreur E non nulle, mais faible.

Une troisième variante du système de test de l'invention, représentée sur la figure 4, permet également une grande sensibilité à ces faibles défauts de l'annuleur d'écho. Les éléments de la figure 4 identiques à ceux des figures précédentes portent les mêmes références.

Ce système de test comporte un circuit 40 inséré entre la sortie du circuit de référence 14 et l'entrée 21 du circuit additionneur 20 et de préférence un circuit atténuateur 41 inséré sur le chemin du signal de bouclage entre le circuit interrupteur 23 et l'entrée 22 du circuit additionneur 20. Le circuit 40 a pour fonction de changer la forme du signal appliqué à son entrée de telle sorte qu'en réponse au signal de bouclage $y_B$, il fournisse un signal différent, qui ne puisse être reconnu par le récepteur 10 comme correspondant à la séquence de test émise. Le circuit 40 peut être par exemple un filtre. Enfin aux bornes de ce circuit 40 est connecté un circuit interrupteur 42 qui est commandé par le signal S de façon à être fermé en dehors de la période de test et ouvert pendant la période de test.

Il est donc clair qu'en dehors de la période de test, le fonctionnement du modem n'est pas affecté par le circuit 40 qui est court-circuité par le circuit interrupteur 42 fermé, et par le circuit 41 qui est déconnecté par le circuit interrupteur 23 ouvert.

Pendant la période de test, les circuits 40 et 41 sont en service. Si l'annuleur d'écho fonctionne correctement, le signal d'erreur E appliqué au circuit 40 est quasiment nul et ce circuit 40 fournit également un signal quasiment nul. Il en résulte que le récepteur 10 restitue un signal identique à la séquence de test. Si l'annuleur d'écho a un défaut de fonctionnement tel que le signal d'erreur E soit indéterminé, on obtient toujours à la sortie du récepteur 10 un signal différent de la séquence de test émise. Si l'annuleur d'écho a un défaut de fonctionnement tel que le signal d'erreur E soit égal au (ou voisin du) signal de bouclage $y_B$, le circuit 40 fournit un signal différent de $y_B$ et le récepteur 10 ne reconnaît plus dans le signal de combinaison qu'il reçoit du circuit additionneur 20, le signal de bouclage $y_B$. Le récepteur 10 restitue donc un signal différent de la séquence de test émise. Enfin, pour déceler de faibles défauts de l'annuleur d'écho se traduisant par une valeur du signal d'erreur E non nulle, mais faible, il est avantageux d'utiliser un circuit atténuateur 41. Le coefficient d'atténuation k de ce circuit 41 peut être choisi de sorte que le signal $ky_B$ qui est pratiquement le seul appliqué au récepteur 10 lorsque l'annuleur d'écho fonctionne correctement, soit juste au-dessus de la limite de sensibilité de ce récepteur 10, ce dernier restituant alors la séquence de test émise. On obtient alors qu'un signal d'erreur E faible, changé de forme par le circuit 40, produit à la sortie du circuit additionneur 20 un signal dans lequel le récepteur 10 ne peut reconnaître le signal de bouclage correspondant à la séquence de test émise. Ainsi, au-dessus d'une valeur du signal d'erreur E aussi faible que l'on veut et réglable par le coefficient d'atténuation k, le récepteur 10 fournit un signal différent de la séquence de test émise.

Il est tout à fait possible enfin de combiner la variante du système de test de la figure 4, avec les variantes représentées sur les figures 2 et 3.

On a décrit ci-dessus l'application du système de test de l'invention à un modem de transmission de données muni d'un annuleur d'écho. On retrouve en téléphonie le même problème de test chaque fois qu'un dispositif de couplage deux fils-quatre fils destiné à coupler une ligne de transmission bidirectionnelle à des lignes unidirectionnelles d'émission et de réception, est muni d'un annuleur d'écho pour annuler les échos procurés par la ligne de transmission. Il est clair que le système de l'invention convient parfaitement pour tester le fonctionnement d'un tel dispositif.

## Revendications

1. Système de test d'un dispositif comportant un circuit d'émission (4) et un circuit de réception (10) couplés à une ligne de transmission (23) par l'intermédiaire d'une jonction hybride (6), ce dispositif comportant un annuleur d'écho muni d'un circuit de différence (14) dont une entrée (+) est connectée à l'extrémité réceptrice (9) de la jonction hybride, l'autre entrée (–) à un générateur (15) de signal de copie d'écho, et enfin la sortie audit circuit de réception (10), ledit test consistant en une comparaison du signal restitué par le circuit de réception (10) et d'un signal de test appliqué au circuit d'émission (4) lorsque le dispositif à tester est bouclé du côté de la ligne de transmission, ce système de test étant caractérisé en ce qu'il comporte un circuit additionneur (20) dont la première entrée (21) est connectée à la sortie du circuit de différence (14), dont la sortie est connectée au circuit de réception (10) et dont la deuxième entrée (22) est connectée à l'extrémité réceptrice (9) ou émettrice (5) de la jonction hybride (6) par l'intermédiaire d'un circuit interrupteur (23) qui est fermé lors d'un test, des moyens (24 à 29) étant prévus pour rendre le signal restitué par le circuit de réception (10) différent du signal de test appliqué au circuit d'émission lorsque le signal (E) fourni par le circuit de différence dépasse un seuil correspondant à une limite pour le bon fonctionnement de l'annuleur d'écho.

2. Système de test selon la revendication 1, caractérisé en ce qu'il comprend un détecteur de signal (24) qui est connecté, par l'intermédiaire d'un circuit interrupteur (26) qui est fermé lors d'un test, entre la sortie du circuit de différence (14) et une borne d'accès (25) du circuit de réception (10), le détecteur de signal (24) étant agencé avec le circuit de réception (10) pour rendre le signal restitué par le circuit de réception différent du signal de test lorsque le signal (E) à son entrée dépasse ledit seuil.

3. Système de test selon l'une des revendications 1 ou 2, caractérisé en ce qu'il comprend un circuit (30) connecté en série avec la première entrée (21) dudit circuit additionneur (20) et/ou un circuit (31) connecté en série avec la deuxième entrée (22) dudit circuit additionneur, les fonctions de ces deux circuits étant différentes et telles que, lorsque l'un ou l'autre de ces circuits reçoit un signal, le circuit de réception (10) restitue un signal correspondant, alors que, lorsque le signal (E) fourni par le circuit de différence (14) dépasse ledit seuil lors d'un test, le signal de combinaison fourni par le circuit additionneur (20) produit à la sortie du circuit de réception un signal différent du signal de test.

4. Système de test selon la revendication 3, caractérisé en ce que l'un ou l'autre des deux circuits (30, 31) connectés en série avec les entrées du circuit additionneur (20) a une fonction d'inverseur.

5. Système de test selon l'une des revendications 3 ou 4, caractérisé en ce que l'un ou l'autre des deux circuits (30, 31) connectés en série avec les entrées du circuit additionneur (20) a une fonction de retard.

6. Système de test selon l'une des revendications 1 à 5, caractérisé en ce qu'il comprend un circuit (40) qui est connecté en série avec la première entrée (21) du circuit additionneur (20) et agencé pour changer la forme du signal appliqué à son entrée, un circuit interrupteur (42) connecté aux bornes dudit circuit étant commandé pour être fermé en dehors de la période de test et ouvert pendant cette période.

7. Système de test selon la revendication 6, caractérisé en ce qu'il comprend un circuit atténuateur (41) qui est connecté en série avec la deuxième entrée (22) du circuit additionneur (20).

## Claims

1. A test arrangement for testing apparatus comprising a transmitting circuit (4) and a receiving circuit (10) coupled to a transmission line (2, 3) by means of a hybrid junction (6), the apparatus also comprising an echo canceller provided with a difference circuit (14) which has one input (+) connected to the receiving end (9) of the hybrid junction, another input (−) to an echo copy signal generator (15) and, finally, the output to said receiving circuit (10), a test consisting of comparing the signal restituted by the receiving circuit (10) and a test signal applied to the transmitting circuit (4) when the apparatus is connected in a feedback mode from the transmission line end, and the arrangement being characterized in that it comprises an adder circuit (20) having a first input (21) connected to the output of the difference circuit (14), an output connected to the receiving circuit (10) and a second input (22) connected to the receiving end (9) or transmitting end (5) of the hybrid junction (6) by means of an interrupter circuit (23) which is closed during a test, means (24 to 29) being provided to render the signal restituted by the receiving circuit (10) different from the test signal applied to the transmitting circuit when the signal (E) supplied by the difference circuit exceeds a threshold which corresponds to a limit for the proper operation of the echo canceller.

2. A test arrangement as claimed in Claim 1, characterized in that it comprises a signal detector (24) which is connected between the output of the difference circuit (14) and a port (25) of the receiving circuit (10) by means of an interrupter circuit (26) which is closed during a test, the signal detector (24) being operable when the signal (E) at its input exceeds said threshold to cause the receiving circuit (10) to render the signal restituted by the receiving circuit (10) to render the signal restituted by the receiving circuit different from the test signal.

3. A test arrangmeent as claimed in one of the Claims 1 or 2, characterized in that it comprises a circuit (30) arranged in series with the first input (21) of said adder circuit (20) and/or a circuit (31) arranged in series with the second input (22) of said adder circuit, these two circuits operating in different ways such that when one or the other of these circuits receives a signal, the receiving circuit (10) restitutes a corresponding signal, whereas the combined signal supplied by the adder circuit (20) produces at the output of the receiving circuit a signal differing from the test signal when the signal (E) supplied by the difference circuit (14) esceeds said threshold during a test.

4. A test arrangement as claimed in Claim 3, characterized in that either the one or the older of the two circuits (30, 31) arranged in series with the inputs of the adder circuit (20) operates as an inverter.

5. A test arrangement as claimed in one of the Claims 3 or 4, characterized in that either the one or the order of the two circuits (30, 31) arranged in series with the inputs of the adder circuit (20) operates as a delay device.

6. A test arrangement as claimed in any one of the Claims 1 to 5, cahracterized in that it comprises a circuit (40) which is arranged in series with the first input (21) of said adder circuit (20) and is arranged so as to change the shape of the signal applied to its input, and an interrupter circuit (42) connected to the terminals of the said circuit being controlled so that it is closed outside the test period and open during this period.

7. A test arrangement as claimed in Claim 6, characterized in that it comprises an attenuator circuit (41) which is arranged in series with the second input (22) of the adder circuit (20).

## Ansprüche

1. System zum Prüfen einer Vorrichtung mit einer Sendeschaltung (4) und einer Empfangsschaltung (10), die mittels eines hybriden Koppelkreises (6) mit einer Übertragungsleitung 2, 3) gekoppelt sind, wobei die Vorrichtung einen Echo-Kompensator aufweist, der mit einer Differenzschaltung (14) versehen ist, deren erster Eingang (+) mit dem empfängerseitigen Anschluß (9) des hybriden Koppelkreises, deren zweiter Eingang (−) mit einem Echokopiesignalgenera-

tor (15) und deren Ausgang mit der Empfangsschaltung (10) verbunden ist, wobei das Prüfen aus dem Vergleich des durch die Empfangsschaltung (10) wiederhergestellten Signals mit einem der Sendeschaltung (4) zugeführten Prüfsignal besteht, wenn die zu überprüfende Vorrichtung auf der Seite der Übertragungsleitung überbrückt wird, dadurch gekennzeichnet, daß das System eine Addierschaltung (20) aufweist, deren erster Eingang (21) mit dem Ausgang der Differenzschaltung (14) verbunden ist, deren Ausgang mit der Empfangsschaltung (10) verbunden ist und deren zweiter Eingang (22) mit dem empfänger- oder senderseitigen Anschluß (9 bzw. 5) des hybriden Koppelkreises (6) mittels einer Unterbrecherschaltung (23) verbunden ist, die beim Überprüfen geschlossen ist, wobei Mittel (24 bis 29) vorgesehen sind, um das durch die Empfangsschaltung (10) wiederhergestellte Signal dann von dem der Sendeschaltung zugeführten Prüfsignal abweichend zu machen, wenn das durch die Differenzschaltung gelieferte Signal (E) eine Schwelle überschreitet, die einer Grenze zum einwandfreien Betrieb des Echo-Kompensators entspricht.

2. Prüfsystem nach Anspruch 1, dadurch gekennzeichnet, daß das System einen Signaldetektor (24) aufweist, der zwischen den Ausgang der Differenzschaltung (14) und eine Anschlußklemme (25) der Empfangsschaltung (10) mittels einer Unterbrecherschaltung (26) angeschlossen ist, die beim Überprüfen geschlossen ist, wobei der Signaldetektor (24) in Verbindung mit der Empfangsschaltung (10) derart angeordnet ist, daß das durch die Empfangsschaltung wiederhergestellte Signal von dem Prüfsignal abweicht, wenn das Signal (E) an seinem Eingang die Schwelle überschreitet.

3. Prüfsystem nach einem der Ansprüche 1 oder 2, dadurch gekennzeichnet, daß das System eine Schaltung (30) enthält, die mit dem ersten Eingang (21) der Addierschaltung (20) in Reihe liegt und/oder eine Schaltung (31), die mit dem zweiten Eingang (22) der genannten Addierschaltung in Reihe liegt, wobei diese zwei Schaltungen verschiedenartig arbeiten, so daß, wenn eine der beiden Schaltungen ein Signal empfängt, die Empfangsschaltung (10) ein entsprechendes Signal wiederherstellt, während das durch die Addierschaltung (20) gelieferte Kombinationssignal an dem Ausgang der Empfangsschaltung ein Signal erzeugt, das von dem Prüfsignal abweicht, wenn das durch die Differenzschaltung (14) gelieferte Signal (E) die Schwelle beim Prüfen überschreitet.

4. Prüfsystem nach Anspruch 3, dadurch gekennzeichnet, daß eine der beiden Schaltungen (30, 31), die mit den Eingängen der Addierschaltung (20) in Reihe liegen, als Inverter wirksam ist.

5. Prüfsystem nach einem der Ansprüche 3 oder 4, dadurch gekennzeichnet, daß eine der beiden Schaltungen (30, 31), die mit den Eingängen der Addierschaltung (20) in Reihe liegen, als Verzögerungsanordnung wirksam ist.

6. Prüfsystem nach einem der Ansprüche 1 bis 5, dadurch gekennzeichnet, daß das System eine Schaltung (40) enthält, die mit dem ersten Eingang (21) der Addierschaltung (20) in Reihe liegt und die Form des ihrem Eingang zugeführten Signals ändert, sowie eine mit den Anschlüssen der erstgenannten Schaltung verbundene Unterbrecherschaltung (42), die derart gesteuert wird, daß sie außerhalb der Prüfungsperiode geschlossen und während dieser Periode geöffnet ist.

7. Prüfsystem nach Anspruch 6, dadurch gekennzeichnet, daß das System eine Dämpfungsschaltung (41) enthält, die mit dem zweiten Eingang (22) der Addierschaltung (20) in Reihe liegt.

FIG.1.

FIG.2.

FIG.3.

FIG.4.